# EUROPEAN PATENT SPECIFICATION

(11) **EP 1 756 809 B1**
(45) Date of publication and mention of the grant of the patent: **18.06.2008**
(21) Application number: 05748110.3
(22) Date of filing: 30.05.2005
(51) Int. Cl.: G11B 7/0045, G11B 7/26

(54) **RECORD CARRIER WITH IMPROVED MODULATION AND ASYMMETRY**
AUFZEICHNUNGSTRÄGER MIT VERBESSERTER MODULATION UND ASYMMETRIE
AMELIORATION DE LA MODULATION ET DE L'ASYMETRIE D'UN SUPPORT D'ENREGISTREMENT

(30) Priority: 03.06.2004 EP 04102470
(43) Date of publication of application: 28.02.2007
(73) Proprietor: Koninklijke Philips Electronics N.V., 5621 BA Eindhoven (NL)
(72) Inventor: MEINDERS, Erwin, R., NL-5656 AA Eindhoven (NL); NEIJZEN, Jacobus, H., M., NL-5656 AA Eindhoven (NL)
(74) Representative: van Liempd, Jan
(86) International application number: PCT/IB2005/051755
(87) International publication number: WO 2005/119661

(56) References cited:
- EP-A- 0 388 271
- EP-A- 0 977 189
- EP-A- 1 069 563
- US-A- 5 327 411
- US-A- 6 026 072
- US-B1- 6 611 481
- PATENT ABSTRACTS OF JAPAN vol. 2003, no. 12, 5 December 2003 (2003-12-05) & JP 2004 022048 A (NIPPON HOSO KYOKAI <NHK>), 22 January 2004 (2004-01-22) & JP 2004 022048 A (NIPPON HOSO KYOKAI <NHK>) 22 January 2004 (2004-01-22)

## Description

The invention relates to a record carrier comprising a train of marks and lands, which has a plurality of marks comprising shortest marks and other marks and a plurality of lands between said marks in a direction of said train of marks and lands comprising shortest lands and other lands, said train of marks and lands having information read by applying a light beam, and a land area not being part of said train of marks and lands. The invention further relates to a method and a device for manufacturing such a record carrier.

A record carrier as described in the opening paragraph and a method for manufacturing the same are known from US 6,026,072. The shortest marks on that record carrier have a width larger than that of the other marks. By that it is achieved to increase the modulation of the shortest marks such that the cut-off frequency of the modulation transfer function (MTF) is effectively increased.

According to the recently introduced Blu-ray Disc (BD) ROM standard 25 GB can be recorded on a single 12 cm rewritable disc. The smallest mark lengths corresponding to this density are 149 nm (d = 1 code). This length is substantially smaller than the width of the optical profile incident on the recording layer. The key-factor enabling the writing of such short marks is the re-crystallization at the trailing edges of recorded marks in the phase change material, resulting in typical crescent shaped marks. Since the width of these short marks is equal to the width of the longer marks, the optical modulation of these short marks remains sufficient for reliable read-back of the data.

In addition to the rewritable BD format, the BD ROM standard is proposed. Three data capacities are prescribed in the BD-ROM standard, namely 23.3, 25 and 27 GB. Several processes are currently considered to make replicated ROM discs at the prescribed data capacities, namely, phase transition mastering, deep UV mastering, liquid immersion deep UV mastering and electron beam mastering. All processes have in common that a small focused beam (laser or electron) locally illuminates a film of a material and in this way alters the film. This is a cumulative process since writing in a central track will also cause partial illumination of the adjacent tracks. The film of said material can, for example, be resist for the deep UV methods or an organic/inorganic material for E-beam mastering. In a following processing step, the illuminated material is chemically removed such that physical pits remain in the surface. The surface topography of this layer with small marks is transferred to a metal master, usually called stamper. This stamper is used to make replicated discs, via a glass/2P process or injection molding in case of mass fabrication. The shape of the optical spot is directly transposed to the mastered mark. A small spot size is beneficial for high-density mastering.

In a deep UV mastering device, UV radiation (257 nm) is used in combination with a far-field objective lens with a high numerical aperture (NA), about 0.9. The resulting spot has an lie diameter of about 170 nm. The marks or pits mastered with such a device are rather small but so far it has been difficult to master a 23.3 GB disc according to the BD-specifications. A much smaller spot size of about 130 nm (1/e diameter) is obtained in case of liquid immersion mastering. A liquid film, having a substantially higher index of refraction than air, is applied in between the objective lens and thin-film resist to obtain a much higher numerical aperture. In case of a thin water film, an NA of 1.2-1.25 typically results. An E-beam spot is even smaller, typically below 100 nm.

For making a high data-density 27 GB BD-ROM disc that fulfils the requirements of the Blu-ray Disc standard, the channel bit length corresponding to one half of the length of a shortest mark is reduced from 74.5 to 69 nm. This reduction leads to a modulation reduction because of the smaller size of especially the shortest marks. Even when the method of US 6,026,072 for manufacturing record carriers is applied there is still the disadvantage that only the MTF of the shortest marks is improved, but the modulation of the other marks stays unimproved. A further disadvantage is that the widening of the shortest marks not only results in an improved modulation but also introduces or increases an asymmetry between average signal amplitudes of said shortest marks and said other marks. These disadvantages hinder a further improvement of the data density of record carriers.

US6611481 discloses an optical recording/reproducing apparatus for forming multiple marks with nine mutually different lengths, which are represented as 3T through 11T according to an eight-to-sixteen modulation coding technique, in an information layer of a rewritable information carrier by irradiating the information layer with a pulsed radiation beam. A test mark with a length equal to or greater than 7T is once recorded in the information layer, a signal associated with the test mark is read out and then an average power of the pulsed radiation beam is corrected to uniformize the widths of marks with various lengths of 7T more. This correction may be performed by partially increasing the power of the radiation beam represented as a multi-pulse train. Particularly, three types of marks are formed, wherein the longer and longest marks show a reduced width in the middle portion.

It is an object of the invention to provide a record carrier with an improved modulation of all marks without sacrificing tangential density and to further provide a record carrier with a reduced or substantially no asymmetry. It is a further object to provide a method and a device for manufacturing such a record carrier.

In order to achieve the object a record carrier is proposed as claimed in claim 1, according to which said shortest marks and leading and trailing edges of said other marks have a width larger than that of a central mark section between said leading and trailing edges of said other marks and said lands between said marks in said direction of said train of marks and lands have a reflectivity lower than that of said land area.

The invention is based on the idea, that the modulation of said other marks can be improved by widening of leading and trailing edges of longer marks. Since the width of said central mark section is unchanged, there is substantially no influence on the tangential density. The increased width results in more modulation.

It is to be noted that the term "reduced reflectivity" does herein not only relate to the reduced physical property of an ability to reflect light at all, but also to the property of a land or a land section of an apparently reduced physical reflectivity due to destructive phase interference.

The record carrier comprises said train of marks and lands as a spiral going around its center with an increasing radial distance to said center of the record carrier. The radial distance between adjacent center lines of said train of marks and lands is called track pitch. As said train of marks and lands does not completely cover the complete available area of the record carrier there is an area, herein called land area, which is no part of said train of marks and lands and is in fact located between the adjacent tracks of said train of marks and lands.

By adjusting the reflectivity of said lands it is therefore possible to adjust said average signal amplitudes to reduce said asymmetry. Reducing the reflectivity of said lands between said marks leads to a reduced maximum signal of the modulation by which the asymmetry can be reduced or prevented.

A particular embodiment of a record carrier according to the invention is characterized in that said other lands between said marks in said direction of said train of marks and lands have a reflectivity lower than that of the shortest lands. The asymmetry is mainly influenced by the reflectivity of said other lands in comparison to that of said shortest lands. In addition, a reduction of the reflectivity of said shortest lands may lead to an unwanted reduction of the modulation.

A preferred embodiment of a record carrier according to the invention is characterized in that central land sections between leading and trailing edges of said lands in said direction of said train of marks and lands have a lower reflectivity than said leading and trailing edges of said lands. The reduction of the reflectivity of said central land sections and the related higher reflectivity of said leading and trailing edges in comparison to said central land sections result in a better modulation.

A further embodiment of a record carrier according to the invention is characterized in that said leading and trailing edges of said lands have a length which is in the range of one fourth to two times of the length of said shortest lands. The length of said leading and trailing edges is a parameter for a write strategy which can easily be used to exclude said shortest lands and shorter lands of said other lands completely from being reduced in reflectivity.

Another embodiment of a record carrier according to the invention is characterized in that said shortest marks have a substantially oval shape, i.e. having a larger width in a radial direction than in a tangential direction. One simple way to increase the width of said shortest marks and of other sections of marks is to use an oval shaped optical spot which gives a substantially oval shaped shortest mark. The total received illumination during mastering determines the size of the written mark. The chemical development process involves a certain threshold, only the resist areas that have received a certain amount of illumination will effectively develop to a mark, the areas that have received insufficient illumination remain untouched. The total illumination is the sum of the Airy-like (or Gaussian-like) intensity distribution. The mastered mark will therefore always resemble the area of illumination. In order to achieve the smallest spot size possible, in fact this is why liquid immersion is used, a well-defined optical spot is pursued. An increase of the total amount of illumination will lead to a larger mark, both in the tangential (track) direction as the radial direction. A smaller spot can be obtained if the illumination is reduced, i.e. only the top of the Airy distribution is used to write the actual mark. Thus by variation of the intensity, or by variation of the dwell time of the laser spot (the linear velocity of the substrate) the mark size can be influenced.

There are different possibilities to obtain an oval-shaped optical spot:
- Reduction of the (effective) numerical aperture in the radial direction;
- Astigmatic aberration of the wave front (As a result of astigmatism, two focal 'lines' (ovals) are formed. By choosing the proper direction of the astigmatism during recording, an oval spot profile with the long axis in the radial direction can be obtained for the mastering process. Astigmatism can be deliberately introduced in the laser beam by e.g. using a LC cell or one can use the intrinsic astigmatism that is generated by the laser. A detailed description of the use of astigmatism for write-once recording is described in international patent application IB 2003/050019 (PHNL021225));
- Pupil filling;
- Oval pupil;
- Mask/diaphragm in light path; and
- Polarization effects.

The advantage of using astigmatism compared to the use of reduced radial NA, is that no optical power is lost as the reduction of radial NA always gives away a part of the incident light beam. An enhancement of the NA in tangential direction is beneficial as well, but more difficult to realize in practice, as a lens re-design is required.

The spot-deformation may be only desired for mastering the smallest marks. Switching between an oval and circular spot is an option but difficult to realize considering the MHz frequency that is required for switching. A mechanical device is for that reason not easy to design and to realize. An electric-optical or acoustic-optical element could also be used.

Another possibility to increase the width of said shortest marks and of other sections of marks includes using a resist material with anisotropic photo-chemical development properties. The spin-coat process may be used to introduce anisotropy. Anisotropy may also be introduced by patterning an interface layer in between the resist and substrate.

Another preferred embodiment of a record carrier according to the invention is characterized in that said lower reflectivity is achieved by forming grooves in said lands and or land marks having a smaller depth than said marks. This lower reflectivity can be achieved by using the same means which are used to form the marks, therefore no additional equipment is needed.

A method for manufacturing a record carrier according to the invention is defined in claim 7 and comprises the steps of:
- applying an exposure light beam modulated in accordance with an information signal to be recorded, thereby forming a train of marks and lands on a master, and
- manufacturing a record carrier by using said master, said record carrier having a readable train of marks and lands, in which information is recorded, by applying a light beam to the record carrier,
wherein said exposure light beam is applied according to a write strategy using a first set of write parameters for forming shortest marks and leading and trailing edges of said other marks, and using a second set of write parameters for forming a central mark section between said leading and trailing edges of said other marks, said shortest marks and leading and trailing edges of said other marks being formed with a width larger than that of said central mark section and wherein said exposure light beam is applied to said lands between said marks (19) in a direction of said train of marks and lands (15) using a third set of write parameters for forming lands having a reflectivity lower than that of said land area.

A corresponding device for manufacturing a record carrier according to the invention is defined in claim 8.

In the following, embodiments of a record carrier and the method for manufacturing the same according to the invention will be explained further in detail with reference to the figures, in which:
Fig. 1 shows jitter versus mark width for said shortest marks widened and unwidened,
Fig. 2a shows forms of a shortest mark and of another mark according to the invention,
Figs. 2b to 2d illustrate write strategies for achieving such forms,
Fig. 3 shows signal amplitude versus mark width,
Figs. 4a and 4b show the reflectivity of a conventional train of marks and lands and of a train of marks and lands according to the invention, and
Fig. 5 shows another train of marks and lands according to the invention.

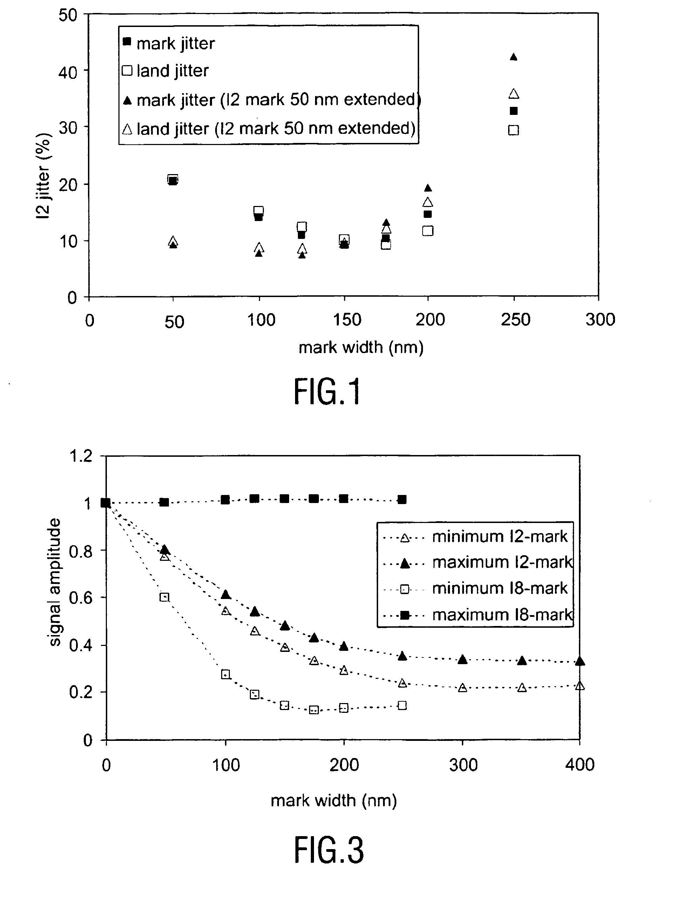

Using the scalar diffraction program "IntersUp" calculations were done to study the influence of broader marks on optical cross-talk due to data present in adjacent tracks. The data track pitch was 320 nm. The data-to-data jitter of an 12-12 carrier present in the central track as a function of the marks width being the width of all marks present in the central and adjacent tracks was calculated. The results are given in Fig. 1. Shown are two sets of calculations. In the first series (shown as squares) all marks (12 to 18) have the same nominal width. In the second series (shown as triangles), all marks have the same nominal width, except the 12 marks which nominal width is extended with 50 nm. The open symbols are related to mark jitter while the filled symbols are related to land jitter. The typical jitter bath-tub clearly illustrate the optimum mark width. For a reduced mark width, the modulation drops accordingly which causes an increase in jitter. For small mark widths, the jitter is limited by modulation. If a mark is too wide it is extended in the adjacent tracks. This optical cross talk gives rise to increased jitter levels, however with a much steeper dependence. So the upper bound of the mark width is limited by optical cross-talk. Obviously, there exists an optimum mark width of about 150-170 nm, indicating the compromise between modulation and optical cross-talk. A somewhat better performance is obtained if only the width of the 12 marks is extended. The term 12 mark corresponds to the shortest marks indicating that said shortest marks are formed relating to two clock periods. The 18 marks are examples of said other marks having a length in radial direction (4 times) longer than that of said shortest marks.

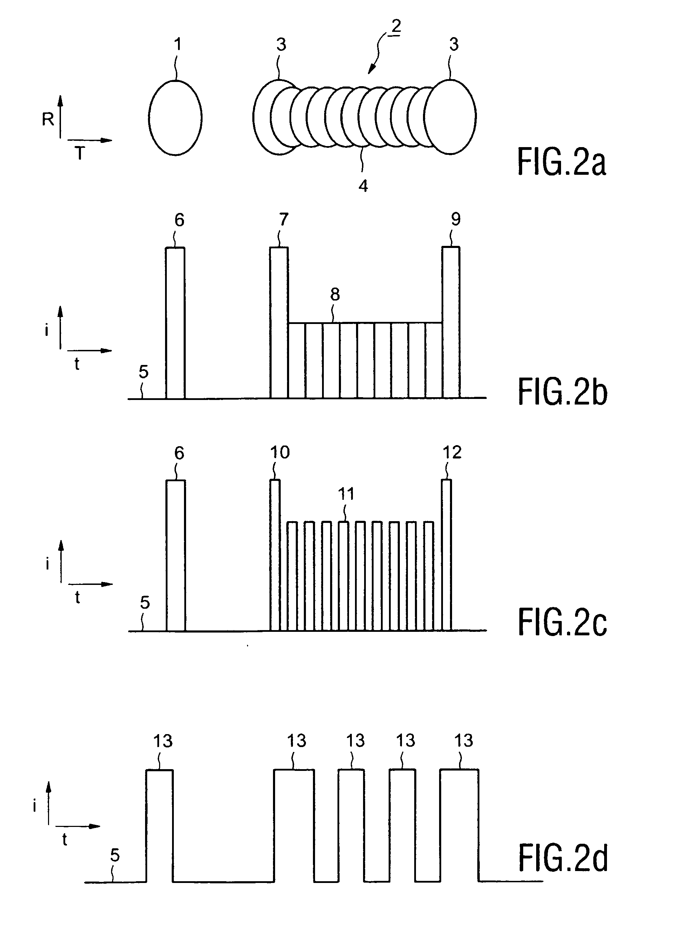

Fig. 2a shows forms of a shortest mark 1 and of another mark 2 being one example of said other marks, i.e. a mark 2 having a longer length in tangential direction T than said shortest mark 1, according to the invention. The shortest mark 1 has a substantially oval shape, i.e. has a larger width in radial direction R than in tangential direction T. The other mark 2 comprises leading and trailing edges 3 and a central mark section 4, the leading and trailing edges 3 having a width larger than that of the central marks section 4. These increased widths results in better modulation.

Figs. 2b to 2d illustrate different write strategies according to the invention for achieving such forms giving a relationship between time t and write power level or intensity i. The write strategies comprise write parameters as write power level or intensity of the exposure light beam, pulse rate and pulse width of said exposure light beam.

According to a first write strategy, as shown in Fig. 2b, the exposure light beam is applied with a first write power level 6, higher than a bias power level 5, for a predetermined period of time, i.e. one or two clock periods, for forming said shortest mark 1. For forming said other mark 2 a second, third and fourth write power level 7, 8 and 9 are applied being higher than said bias power level 5 for respective periods of time for forming said leading edge 3, said central mark section 4, and said trailing edge 3. The third write power level 8 is lower than the write power levels 7 and 9. The write power levels 6, 7, and 9 may be, but not need to be substantially identical. This is a very straightforward write strategy since it only requires different intensities, and the width of the formed marks or parts of marks are directly related to the applied write power levels.

Fig. 2c shows a write strategy comparable to that of Fig. 2b. The write parameters for said shortest marks correspond to that shown in Fig. 2b. The write parameters for forming said other mark give a train of pulses with intensities or write power levels 10, 11 and 12 comprising pulses with a pulse width being intersected by periods of bias power level or intensity 5 with a gap width. The intensities 6, 10 and 12 may be, but do not need to be substantially identical. The intensity 11 is lower than the intensities 10 and 12. This write strategy has the advantage over that shown in Fig. 2b that it is possible to reduce or prevent unintended heating effects in the area of the train of marks and lands during the forming of the marks by adjusting the ratio of the pulse widths and the intensities 10, 11 and 12.

Fig. 2d shows yet another write strategy. There is only one intensity 13 for forming marks, but as in the write strategy shown in Fig. 2c the intensity is pulsed. The different forms of marks are formed by applying pulses of said exposure light beam with different pulse widths. Since the width of the write pulses for writing the central mark section 4 is smaller than that for writing said shortest mark 1 and said leading and trailing edges 3 of said other mark 2 shorter pulses are used for forming these central mark section 4. This reduces or prevents unintended heating effects in a similar way as the write strategy shown in Fig. 2c, but has the advantage that there is no need for different intensities of said exposure light beam which would require a more complex control unit.

Further calculations have been performed with said "IntersUp" program to study the advantage of an increased mark width with respect to the mark modulation. An 12-12 or 18-18 carrier was assumed in the central track. The channel bit length was 69 nm, 12 and 18 marks are then respectively 138 nm and 552 nm long. The width of the marks was varied between 0 and 400 nm. The track pitch was 320 nm but there was no data present in the adjacent tracks. The calculated minimum and maximum value of the I2-I2 and I8-I8 reflection (eye-pattern) is given in Fig. 3 with signal amplitude versus mark width. The open symbols show the minimum signals and the maximum signals are shown by filled symbols. A track without marks has no phase-modulation and results in a normalized level of 1. In case marks are present in the track, phase-modulation results in a periodically changing reflection. An increased mark width results in more phase-modulation, thus lowering the 18 minimum. The 18 mark is long enough to achieve full modulation, the maximum signal (18-land) therefore remains at its initial level, namely 1. The 12 mark is too small to achieve full modulation. An increase in the mark width results therefore in a shift of the average 12-reflection. For an infinitely long mark, i.e. a mark longer than 400 nm, the carrier modulation becomes independent on the mark length, as is seen from the asymptotic behavior of all four data curves. It is also seen that for an increased mark width, the average signal amplitude of the 12-12 and 18-18 carriers are not equal anymore. This so-called asymmetry is a considerable drawback.

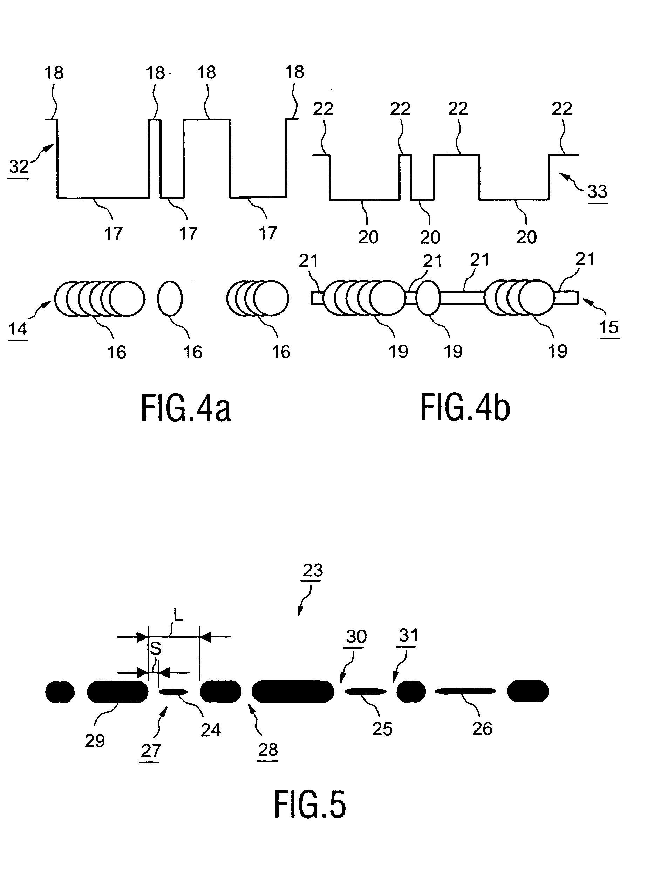

Figs. 4a and 4b show the reflectivities of a conventional train 14 of marks and lands and of a train 15 of marks and lands according to the invention as well as the corresponding reflectivities 32, 33 of these trains 14, 15. The marks 16 of a conventional train 14 of marks and lands have a low reflectivity 17 while the lands between said marks 16 have a rather high reflectivity 18. The marks 19 of a train 15 of marks and lands according to the invention have a reflectivity 20 which is substantially the same as reflectivity 17 of said conventional marks 16.

There are several possibilities to reduce the reflectivity of the lands between said marks 19, for example:
- Mastering of grooves in the land areas by applying a reduced laser power during illumination. In this way, only the narrow peak of the Airy (or Gaussian) light distribution is actually used for illuminating the resist.
- The land areas can also be covered with a sequence of small pits or marks, mastered with ultra-short write pulses of nominal write power or with longer write pulses of a reduced write power.
- The lands can also be covered with a large shallow pit or mark that has a reduced depth with respect to the data marks. A shallow depth results in less phase-modulation such that an intermediate reflection level is measured compared to the reflection levels of marks and unwritten lands.

In the embodiment shown in Fig. 4b the lands comprising grooves 21 between said marks 19 have a reflectivity 22 which is higher than said reflectivity 20 but lower than said reflectivity 18. A reduced reflectivity of said lands causes a reduction of the asymmetry induced by the widening of the shortest marks 1 and of the leading and trailing edges 3 of the other marks 2. The asymmetry reduction is achieved by reducing the reflection level of the intermediate lands, especially the longer ones, by writing for example shallow pits, grooves or other data pattern in the land areas.

Fig. 5 shows a further train 23 of marks 29 and lands 27, 28 according to the invention. Central land sections 24, 25 and 26 between leading and trailing edges 30, 31 of said lands 27, 28 comprise grooves and thus have a lower reflectivity than said leading and trailing edges 30, 31 of said lands 27, 28. A land 27 has a length L and the leading edge of said land 27 has a length S. With a write strategy for forming a groove in a land which leaves out a leading edge 30 of said land with a length S and a trailing edge 31 with a length S no groove would be formed in a shortest land 28 being shorter than two times S. The reduction of the reflectivity of only the central land sections 24, 25 and 26 of longer lands has the advantage that the asymmetry induced by the widening of the shortest marks 1 and of the leading and trailing edges 3 of the other marks 2 is reduced or prevented while the modulation for shorter and shortest lands 28 is not changed.

The present invention proposes a record carrier with improved modulation and asymmetry. The modulation is increased by the widening of said shortest marks and said leading and trailing edges of said other marks. A thereby induced asymmetry is reduced or remedied by reducing the reflectivity of said lands or sections of said lands. It is therefore possible to further increase the data density of record carriers.

## Claims

1. A record carrier comprising a train of marks and lands (14, 15, 23), which has a plurality of marks comprising shortest marks (1) and other marks (2) and a plurality of lands between said marks in a direction of said train of marks and lands comprising shortest lands (28) and other lands (27), said train of marks and lands (14, 15, 23) having information read by applying a light beam, and a land area not being part of said train of marks and lands, wherein said shortest marks (1) and leading and trailing edges (3) of said other marks (2) have a width larger than that of a central mark section (4) between said leading and trailing edges (3) of said other marks (2),
**characterized in that** said lands between said marks (19) in said direction of said train of marks and lands (15) have a reflectivity lower than that of said land area.

2. A record carrier as claimed in claim 1, **characterized in that** said other lands between said marks in said direction of said train of marks and lands have a reflectivity lower than that of the shortest lands.

3. A record carrier as claimed in claim 1, **characterized in that** central land sections (24,25, 26) between leading and trailing edges of said lands (27) in said direction of said train of marks and lands (23) have a lower reflectivity than said leading and trailing edges of said lands.

4. A record carrier as claimed in claim 3, **characterized in that** said leading and trailing edges of said lands have a length which is in the range of one fourth to two times of the length of said shortest lands (28).

5. A record carrier as claimed in claim 1, **characterized in that** said shortest marks (1) have a substantially oval shape.

6. A record carrier as claimed in claim 1, **characterized in that** said lower reflectivity is achieved by forming grooves (21,24, 25,26) in said lands (24,25, 26) and/ or land marks having a smaller depth than said marks.

7. A method of manufacturing a record carrier comprising a train of marks and lands (14, 15, 23), which has a plurality of marks comprising shortest marks(1) and other marks (2) and a plurality of lands between said marks in a direction of said train of marks and lands comprising shortest lands (28) and other lands (27), said train of marks and lands (14, 15, 23) having information read by applying a light beam, and a land area not being part of said train of marks and lands, comprising the steps of:
- applying an exposure light beam modulated in accordance with an information signal to be recorded, thereby forming a train of marks and lands (14, 15, 23) on a master, and
- manufacturing a record carrier by using said master, said record carrier having a readable train of marks and lands (14, 15, 23), in which information is recorded, by applying a light beam to the record carrier,
wherein said exposure light beam is applied according to a write strategy using a first set of write parameters for forming shortest marks (1) and leading and trailing edges (3) of said other marks (2), and using a second set of write parameters for forming a central mark section (4) between said leading and trailing edges (3) of said other marks (2), said shortest marks (1) and leading and trailing edges (3) of said other marks (2) being formed with a width larger than that of said central mark section (4),
**characterized in that** said exposure light beam is applied to said lands between said marks (19) in a direction of said train of marks and lands (15) using a third set of write parameters for forming lands having a reflectivity lower than that of said land area.

8. A device for manufacturing a record carrier comprising a train of marks and lands (14,15, 23), which has a plurality of marks comprising shortest marks(1) and other marks (2) and a plurality of lands between said marks in a direction of said train of marks and lands comprising shortest lands (28) and other lands (27), said train of marks and lands (14, 15,23) having information read by applying a light beam, and a land area not being part of said train of marks and lands, comprising:
- means for applying an exposure light beam modulated in accordance with an information signal to be recorded, thereby forming a train of marks and lands (14,15,23) on a master, and
- means for manufacturing a record carrier by using said master, said record carrier having a readable train of marks and lands (14, 15, 23), in which information is recorded, by applying a light beam to the record carrier,
wherein said means for applying said exposure light beam is adapted to apply said exposure light beam according to a write strategy using a first set of write parameters for forming shortest marks (1) and leading and trailing edges (3) of said other marks (2), and using a second set of write parameters for forming a central mark section (4) between said leading and trailing edges (3) of said other marks (2), said shortest marks (1) and leading and trailing edges (3) of said other marks (2) being formed with a width larger than that of said central mark section (4),
**characterized in that** said means for applying said exposure light beam is adapted to apply said exposure light beam to said lands between said marks (19) in a direction of said train of marks and lands (15) using a third set of write parameters for forming lands having a reflectivity lower than that of said land area.

## Patentansprüche

1. Aufzeichnungsträger mit einer Reihe von Gruben und Flächen (14, 15, 23), wobei diese Reihe eine Anzahl Gruben aufweist, die sehr kurze Gruben (1) und andere Gruben (2) aufweisen, und eine Anzahl Flächen zwischen den genannten Gruben, und zwar in einer Richtung der genannten Reihe von Gruben und Flächen mit sehr kurzen Flächen (28) und anderen Flächen (27), wobei die genannte Reihe von Gruben und Flächen (14, 15, 23) Information enthält, die durch Anwendung eines Lichtbündels ausgelesen wird, und wobei ein Flächengebiet nicht ein Teil der genannten Reihe von Gruben und Flächen ist, wobei die genannten sehr kurzen Gruben (1) und Vor- und Nachlaufränder (3) der anderen Gruben (2) eine Breite haben, die gröber ist als die des zentralen Grubenteils (4) zwischen den genannten Vorlauf- und Nachlaufrändern (3) und den genannten anderen Gruben (2), **dadurch gekennzeichnet, dass** die genannten Flächen zwischen den genannten Gruben (19) in der genannten Richtung der genannten Reihe von Gruben und Flächen (15) ein Reflexionsvermögen aufweisen, die geringer ist als das des genannten Flächengebietes.

2. Aufzeichnungsträger nach Anspruch 1, **dadurch gekennzeichnet, dass** die genannten anderen Flächen zwischen den genannten Gruben in der genannten Richtung der genannten Reihe von Gruben und Flächen ein Reflexionsvermögen haben, das geringer ist als das der sehr kurzen Flächen.

3. Aufzeichnungsträger nach Anspruch 1, **dadurch gekennzeichnet, dass** zentrale Flächenteile (24, 25, 26) zwischen Vorlauf- und Nachlaufrändern der genannten Flächen (27) in der genannten Richtung der genannten Reihe von Gruben und Flächen (23) ein geringeres Reflexionsvermögen haben als die genannten Vorlauf- und Nachlaufränder der genannten Flächen.

4. Aufzeichnungsträger nach Anspruch 3, **dadurch gekennzeichnet, dass** die genannten Vorlauf- und Nachlaufränder der genannten Flächen eine Länge haben, die in dem Bereich von einem Viertel der doppelten Länge der genannten sehr kurzen Flächen (28) liegt.

5. Aufzeichnungsträger nach Anspruch 1, **dadurch gekennzeichnet, dass** die genannten sehr kurzen Gruben (1) eine im Wesentlichen ovale Form haben.

6. Aufzeichnungsträger nach Anspruch 1, **dadurch gekennzeichnet, dass** das genannte geringere Reflexionsvermögen **dadurch** erreicht wird, dass Gruben (21, 24, 25, 26) in den genannten Flächen (24, 25, 26) gebildet werden, und/oder Flächengruben mit einer geringeren Tiefe als die genannten Gruben.

7. Verfahren zum Herstellen eines Aufzeichnungsträgers mit einer Reihe von Gruben und Flächen (14, 15, 23), wobei diese Reihe eine Anzahl Gruben aufweist, die sehr kurze Gruben (1) und andere Gruben (2) aufweisen, und eine Anzahl Flächen zwischen den genannten Gruben in einer Richtung der genannten Reihe von Gruben und Flächen mit sehr kurzen Flächen (28) und anderen Flächen (27), wobei die genannte Reihe von Gruben und Flächen (14, 15, 23) Information enthält, die durch Zuführung eines Lichtbündels ausgelesen werden kann, und wobei ein Flächengebiet nicht ein Teil der genannten Reihe von Gruben und Flächen ist, wobei dieses Verfahren die nachfolgenden Verfahrensschritte umfasst:
- das Zuführen eines Belichtungslichtbündels, das entsprechend einem aufzuzeichnenden Informationssignal moduliert ist, wobei eine Reihe von Gruben und Flächen (14, 15, 23) auf einem Master gebildet wird, und
- das Herstellen eines Aufzeichnungsträgers durch Verwendung des genannten Masters,
wobei der genannte Aufzeichnungsträger eine auslesbare Reihe von Gruben und Flächen (14, 15, 23) aufweist, in der Information aufgezeichnet ist, und zwar durch Zuführung eines Lichtbündels zu dem Aufzeichnungsträger,
wobei das genannte Belichtungslichtbündel entsprechend einer Schreibmethode zugeführt wird, wobei ein erster Satz von Schreibparametern verwendet wird, und zwar zum Bilden von sehr kurzen Gruben (1) und Vorlauf- und Nachlaufrändern (3) der genannten anderen Gruben (2), und durch Verwendung eines zweiten Satzes von Schreibparametern zum Bilden eines zentralen Grubenteils (4) zwischen den genannten Vorlauf- und
Nachlaufrändern (3) der genannten anderen Gruben (2), wobei die genannten sehr kurzen Gruben (1) und die Vorlauf- und Nachlaufränder (3) der genannten anderen Gruben (2) mit einer Breite gebildet werden, die größer ist als der genannte zentrale Grubenteil (4), **dadurch gekennzeichnet, dass** das genannte Belichtungslichtbündel den genannten Flächen zwischen den genannten Gruben (19) zugeführt wird, und zwar in einer Richtung der genannten Reihe von Gruben und Flächen (15), unter Verwendung eines dritten Satzes von Schreibparametern zum Bilden von Flächen mit einem Reflexionsvermögen, das geringer ist als das des genannten Flächengebietes.

8. Anordnung zum Herstellen eines Aufzeichnungsträgers mit einer Reihe von Gruben und Flächen (14, 15, 23), wobei diese Reihe eine Anzahl Gruben aufweist, die sehr kurze Gruben (1) und andere Gruben (2) aufweisen, und eine Anzahl Flächen zwischen den genannten Gruben in einer Richtung der genannten Reihe von Gruben und Flächen mit sehr kurzen Flächen (28) und anderen Flächen (27), wobei die genannte Reihe von Gruben und Flächen (14, 15, 23) Information enthält, die durch Zuführung eines Lichtbündels ausgelesen wird, und wobei ein Flächengebiet nicht ein der genannten Reihe von Gruben und Flächen ist, wobei diese Anordnung Folgendes umfasst:
- Mittel zum Zuführen eines Belichtungslichtbündels, das entsprechend einem aufzuzeichnenden Informationssignal moduliert ist, wobei eine Reihe von Gruben und Flächen (14, 15, 23) auf einem Master gebildet wird, und
- Mittel zum Herstellen eines Aufzeichnungsträgers durch Verwendung des genannten Masters, wobei der genannte Aufzeichnungsträger eine auslesbare Reihe von Gruben und Flächen (14, 15, 23) aufweist, in denen Information aufgezeichnet wird, und zwar durch Zuführung eines Lichtbündels zu dem Aufzeichnungsträger,
wobei das genannte Mittel zum Zuführen des genannten Belichtungslichtbündels dazu vorgesehen ist, das genannte Lichtbündel entsprechend einer Schreibmethode zuzuführen,
wobei ein erster Satz von Schreibparametern verwendet wird, und zwar zum Bilden von sehr kurzen Gruben (1) und Vorlauf- und Nachlaufrändern (3) der genannten anderen Gruben (2), und durch Verwendung eines zweiten Satzes von Schreibparametern zum Bilden eines zentralen Grubenteils (4) zwischen den genannten Vorlauf- und Nachlaufrändern (3) der genannten anderen Gruben (2), wobei die genannten sehr kurzen Gruben (1) und die Vorlauf- und Nachlaufränder (3) der genannten anderen Gruben (2) mit einer Breite gebildet werden, die größer ist als der genannte zentrale Grubenteil (4),
**dadurch gekennzeichnet, dass** das genannte Mittel zum Zuführen des genannten Belichtungslichtbündels dazu vorgesehen ist, das genannte Belichtungslichtbündel den genannten Flächen zwischen den genannten Gruben (19) zuzuführen, und zwar in einer Richtung der genannten Reihe von Gruben und Flächen (15), unter Verwendung eines dritten Satzes von Schreibparametern zum Bilden von Flächen mit einem Reflexionsvermögen, das geringer ist als das des genannten Flächengebietes.

## Revendications

1. Support d'enregistrement comprenant un train de marques et de méplats (14, 15, 23), qui comporte une pluralité de marques comprenant des marques les plus courtes (1) et d'autres marques (2) et une pluralité de méplats entre lesdites marques dans une direction dudit train de marques et de méplats comprenant des méplats les plus courts (28) et d'autres méplats (27), ledit train de marques et de méplats (14, 15, 23) comportant des informations lues en appliquant un faisceau de lumière, et une zone de méplat ne faisant pas partie dudit train de marques et de méplats, dans lequel lesdites marques les plus courtes (1) et des flancs avant et arrière (3) desdites autres marques (2) ont une largeur supérieure à celle d'une section de marque centrale (4) entre lesdits flancs avant et arrière (3) desdites autres marques (2),
**caractérisé en ce que** lesdits méplats entre lesdites marques (19) dans ladite direction dudit train de marques et de méplats (15) présentent une réflectivité inférieure à celle de ladite zone de méplat.

2. Support d'enregistrement suivant la revendication 1, **caractérisé en ce que** lesdits autres méplats entre lesdites marques dans ladite direction dudit train de marques et de méplats présentent une réflectivité inférieure à celle des méplats les plus courts.

3. Support d'enregistrement suivant la revendication 1, **caractérisé en ce que** des sections de méplat centrales (24, 25, 26) entre des flancs avant et arrière desdits méplats (27) dans ladite direction dudit train de marques et de méplats (23) présentent une réflectivité inférieure à celle desdits flancs avant et arrière desdits méplats.

4. Support d'enregistrement suivant la revendication 3, **caractérisé en ce que** lesdits flancs avant et arrière desdits méplats ont une longueur qui se trouve dans l'intervalle compris entre un quart et le double de la longueur desdits méplats les plus courts (28).

5. Support d'enregistrement suivant la revendication 1, **caractérisé en ce que** lesdites marques les plus courtes (1) ont une forme sensiblement ovale.

6. Support d'enregistrement suivant la revendication 1, **caractérisé en ce que** ladite réflectivité inférieure est obtenue en formant des sillons (21, 24, 25, 26) dans lesdits méplats (24, 25, 26) et/ou des marques de méplat ayant une profondeur inférieure à celle desdites marques.

7. Procédé de fabrication d'un support d'enregistrement comprenant un train de marques et de méplats (14, 15, 23), qui comporte une pluralité de marques comprenant des marques les plus courtes (1) et d'autres marques (2) et une pluralité de méplats entre lesdites marques dans une direction dudit train de marques et de méplats comprenant des méplats les plus courts (28) et d'autres méplats (27), ledit train de marques et de méplats (14, 15, 23) comportant des informations lues en appliquant un faisceau de lumière, et une zone de méplat ne faisant pas partie dudit train de marques et de méplats, comprenant les étapes suivantes :
- l'application d'un faisceau de lumière d'exposition modulé selon un signal d'information à enregistrer, formant de ce fait un train de marques et de méplats (14, 15, 23) sur un maître, et
- la fabrication d'un support d'enregistrement en utilisant ledit maître, ledit support d'enregistrement comportant un train lisible de marques et de méplats (14, 15, 23),
dans lequel des informations sont enregistrées, en appliquant un faisceau de lumière sur le support d'enregistrement,
dans lequel ledit faisceau de lumière d'exposition est appliqué selon une stratégie d'écriture en utilisant un premier ensemble de paramètres d'écriture pour former des marques les plus courtes (1) et des flancs avant et arrière (3) desdites autres marques (2), et en utilisant un deuxième ensemble de paramètres d'écriture pour former une section de marque centrale (4) entre lesdits flancs avant et arrière (3) desdites autres marques (2), lesdites marques les plus courtes (1) et les flancs avant et arrière (3) desdites autres marques (2) étant formées avec une largeur supérieure à celle de ladite section de marque centrale (4),
**caractérisé en ce que** ledit faisceau de lumière d'exposition est appliqué sur lesdits méplats entre lesdites marques (19) dans une direction dudit train de marques et de méplats (15) en utilisant un troisième ensemble de paramètres d'écriture pour former des méplats présentant une réflectivité inférieure à celle de ladite zone de méplat.

8. Dispositif pour fabriquer un support d'enregistrement comprenant un train de marques et de méplats (14, 15, 23), qui comporte une pluralité de marques comprenant des marques les plus courtes (1) et d'autres marques (2) et une pluralité de méplats entre lesdites marques dans une direction dudit train de marques et de méplats comprenant des méplats les plus courts (28) et d'autres méplats (27), ledit train de marques et de méplats (14, 15, 23) comportant des informations lues en appliquant un faisceau de lumière, et une zone de méplat ne faisant pas partie dudit train de marques et de méplats, comprenant :
- un moyen pour appliquer un faisceau de lumière d'exposition modulé selon un signal d'information à enregistrer, formant de ce fait un train de marques et de méplats (14, 15, 23) sur un maître, et
- un moyen pour fabriquer un support d'enregistrement en utilisant ledit maître, ledit support d'enregistrement comportant un train lisible de marques et de méplats (14, 15, 23), dans lequel des informations sont enregistrées, en appliquant un faisceau de lumière sur le support d'enregistrement,
dans lequel ledit moyen pour appliquer ledit faisceau de lumière d'exposition est à même d'appliquer ledit faisceau de lumière d'exposition selon une stratégie d'écriture en utilisant un premier ensemble de paramètres d'écriture pour former des marques les plus courtes (1) et des flancs avant et arrière (3) desdites autres marques (2), et en utilisant un deuxième ensemble de paramètres d'écriture pour former une section de marque centrale (4) entre lesdits flancs avant et arrière (3) desdites autres marques (2), lesdites marques les plus courtes (1) et les flancs avant et arrière (3) desdites autres marques (2) étant formées avec une largeur supérieure à celle de ladite section de marque centrale (4),
**caractérisé en ce que** ledit moyen pour appliquer ledit faisceau de lumière d'exposition est à même d'appliquer ledit faisceau de lumière d'exposition sur lesdits méplats entre lesdites marques (19) dans une direction dudit train de marques et de méplats (15) en utilisant un troisième ensemble de paramètres d'écriture pour former des méplats présentant une réflectivité inférieure à celle de ladite zone de méplat.
